# EUROPEAN PATENT SPECIFICATION

(11) **EP 1 929 828 B1**
(45) Date of publication and mention of the grant of the patent: **24.11.2010**
(21) Application number: 06814067.2
(22) Date of filing: 01.09.2006
(51) Int. Cl.: H04W 36/14

(54) **HARD HANDOFF FROM A WIRELESS LOCAL AREA NETWORK TO A CELLULAR TELEPHONE NETWORK**
HARTES ÜBERGABEVERFAHREN AUS EINEM DRAHTLOSEN LOKALBEREICHNETZWERK IN EIN MOBILES TELEFONNETZWERK
TRANSFERT BRUSQUE D'UN RESEAU LOCAL SANS FIL A UN RESEAU TELEPHONIQUE CELLULAIRE

(30) Priority: 01.09.2005 US 219064
(43) Date of publication of application: 11.06.2008
(73) Proprietor: QUALCOMM MEMS Technologies, Inc., San Diego, CA 92121 (US)
(72) Inventor: YACOBI, Eitan, 30900 Zichron-Ya'akov (IL); KEIDAR, Ron, 34741 Haifa (IL); ZREIQ, Samer, S., 34890 Haifa (IL); RIMONI, Yoram, 34990 Haifa (IL)
(74) Representative: Carstens, Dirk Wilhelm
(86) International application number: PCT/US2006/034247
(87) International publication number: WO 2007/028028

(56) References cited:
- EP-A- 1 538 779
- WO-A-2005/036901
- WO-A1-2004/016010
- WO-A2-2006/020168
- US-A1- 2004 090 937
- US-A1- 2005 048 977

## Description

### BACKGROUND OF THE INVENTION

**Field of the Invention**

This invention generally relates to wireless communications and, more particularly, to a system and method for a hard handoff from a wireless local area network (WLAN) to a cellular telephone network.

**Description of the Related Art**

WLANs compliant with IEEE 802.11, Bluetooth, and networks generally compliant with IEEE 802.15, such as wireless personal area network (WPANs) and ultra-wideband (UVVB) networks, all share the characteristics of being relatively low power networks with high data rates. Bluetooth and 802.15 networks are envisioned for use in a "personal space", such as an office, room, or car, while 802.11 networks operate at larger power levels and are intended to cover larger geographical areas.

All the above mentioned networks can be enabled to support wireless communications services conventionally associated with cellular telephones, such as voice calls and data streaming. However, while cellular telephone links are relatively robust, WLAN links are more susceptible to interruption. When a cellular user terminal (UT) reaches the boundary of a cell site, there is usually enough time to handoff an in-progress call to an adjoining cell. Handoff procedures between WLAN hotspots or access points (APs) are not as well established as they are for cellular networks. WLAN networks are designed for packet data communications, as opposed to real-time voice communications. The delays associated with reacquiring a hotspot are not as noticeable when data is being communicated.

In addition, WLAN coverage planning is often incomplete or sporadic. Further, the small geographical area associated with a hotspot means that a UT can move from a strong link, to loss of coverage almost instantaneously. The end result is that calls being carried by a WLAN- link are susceptible to being dropped before any kind of handoff can be engaged to another access point or network.

It would be advantageous if a hard handoff procedure existed, to transfer a call being carried by a WLAN link, to a cellular telephone network, in the event that the WLAN network link is lost.

Further attention is drawn to the document WO 2005/036901, which describes a method for handing off a call between networks includes monitoring a quality of a first link between a mobile station and a wireless local area network (WLAN) when the mobile station is actively connected with the WLAN on a call and monitoring a quality of a second link between the mobile station and a cellular network when the mobile station is actively connected with the WLAN on the call. The method also includes handing off the call from the WLAN to the cellular network when the quality of the first link is less than a handoff trigger threshold for a drop count duration and when the quality of the second link is greater than a minimum cellular link quality threshold.

Also attention is drawn to the document WO 2004/016010, which described a mobile wireless terminal that, upon transitioning from a wireless telephony network to a wireless Local Area Network (LAN), seeks identification by sending the same identity information used for identification in the wireless telephony network. Upon receipt of the identity information, a wireless LAN Access Server in the wireless telephony network identifies a Serving General Packet Radio Service Serving Node (SGSN) that had last served the wireless terminal in the wireless telephony network prior to transition. The wireless LAN Access Server forwards the identity information to the SGSN, which, in turn, provides an identification response for validating the terminal.

Finally attention is drawn to the document WO 2006/020168, which is prior art in accordance with Art. 54(3) EPC. The document discloses a telephone system that supports communication with user devices over both a cellular radio network as well as over an internet Protocol (IP) network, and enables roaming and active call handoff between cellular and IP domains. Approaches to detecting presence of a user near a suitable IP network are used in controlling transitions between the domains. Components of the system interact with conventional cellular telephone systems, for example, by emulating behavior of control components, providing proxy services for conventional components, transporting cellular telephone control communication over IP connections, or by simulating cellular operating characteristics of user devices operating in an IP domain

### SUMMARY OF THE INVENTION

In accordance with the present invention, a method for supporting a hard handoff procedure, as set forth in claim 1, a system, as set forth in claim 11, a computer program, as set forth in claim 13, a multi-mode portable user terminal, as set forth in claim 14, a method for a cellular server controller, a cellular server controller, as set forth in claim 28, are provided. Embodiments of the invention are claimed in the dependent claims.

Accordingly, a hard handoff system and a method are provided for supporting a hard hand off procedure for a call from a WLAN to a cellular telephone network. The method comprises: establishing a link between a UT and a serving WLAN and establishing a call via the WLAN link; simultaneously monitoring a serving cellular telephone network; forwarding information identifying the UT within the cellular network, to the serving WLAN; in response to losing the link with the serving WLAN, performing a hard handoff to the cellular network; and, continuing the call via the cellular network.

Generally, the hard handoff can be performed if the WLAN is able to communicate the UT's cellular network identity, as the UT's position in the cellular network is known. For example, monitoring a serving cellular network may entail monitoring a serving Base Station Transceiver (BTS) in the cellular network. This step entails the cellular network tracking the UT's position, as a consequence of control charmel communications between the UT and a network cell or registration zone. The step of forwarding information identifying the UT within the cellular network may include forwarding information such as the ESN, MELD, IMSL, or MIN associated with the UT, depending upon the type of cellular network in which the UT is registered.

More specifically, the hard handoff to the cellular network is performed with the UT receiving cellular network resource allocations in a common control channel message, such as a Short Message Service (SMS) or paging message. Then, the UT tunes to an allocated channel in the cellular network, in response to the common control channel message.

Additional details of the above-described method, and a multi-mode portable UT with a hard handoff capability for transferring a call from a WLAN to a cellular telephone network, are provided below.

### BRIEF DESCRIPTION OF THE DRAWINGS

Fig. 1 is a schematic block diagram of a system that supports a hard handoff procedure for transferring a call from a wireless local area network (WLAN) to a cellular network user terminal (UT).

Fig. 2 is a schematic block diagram depicting a UT operating in both a 802.11 hotspot and a cellular network.

Fig. 3 depicts a WLAN to CDMA UHDM-like message flow diagram.

Fig. 4 is a flowchart illustrating a method for supporting a hard handoff procedure for a call from a WLAN to a cellular telephone network in a multi-mode portable UT.

### DETAILED DESCRIPTION

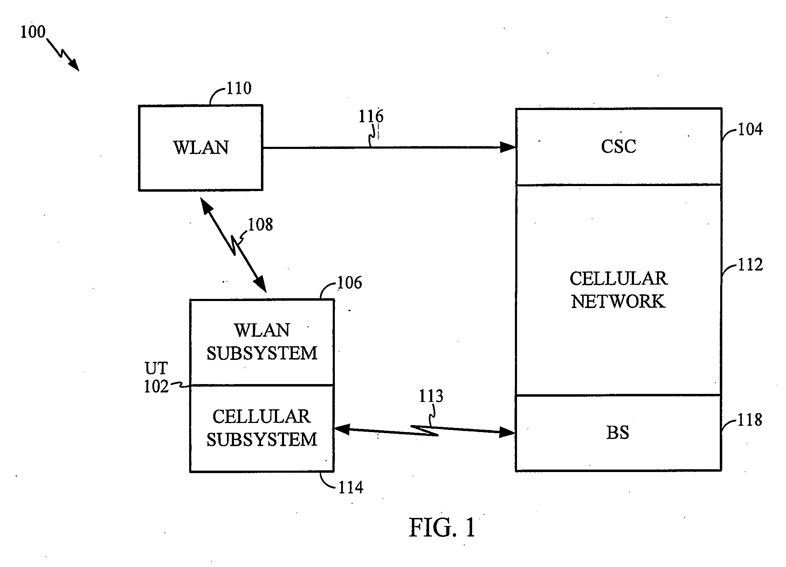

Fig. 1 is a schematic block diagram of a system that supports a hard handoff procedure for transferring a call from a wireless local area network (WLAN) to a cellular network. The system 100 comprises a user terminal (UT) 102 and a cellular server controller (CSC) 104. The UT 102 comprises a WLAN subsystem 106 to establish call through a (wireless) link 108 between the UT 102 and a serving WLAN 110. For example, the UT may be a wireless cellular telephone that also has the capability of communicating with a WLAN. As user herein, WLAN topically describes an IEEE 802.11, IEEE 802.15, or Bluetooth network. However, the system is not limited to any particular network type. Generally, the UT WLAN subsystem 106 forwards information, to the serving WLAN 110, which identifies the UT 102 within a cellular network 112. The WLAN 110 uses this information to identify the UT 102 as a registered unit in the cellular telephone network 112.

The UT 102 also comprises a cellular subsystem 114 registered in, and monitoring the serving cellular telephone network 112 via wireless link 113. In the event of the call being dropped (the link being lost) by the WLAN 110, the cellular subsystem 114 receives a hard handoff command to continue the call via the cellular network 112.

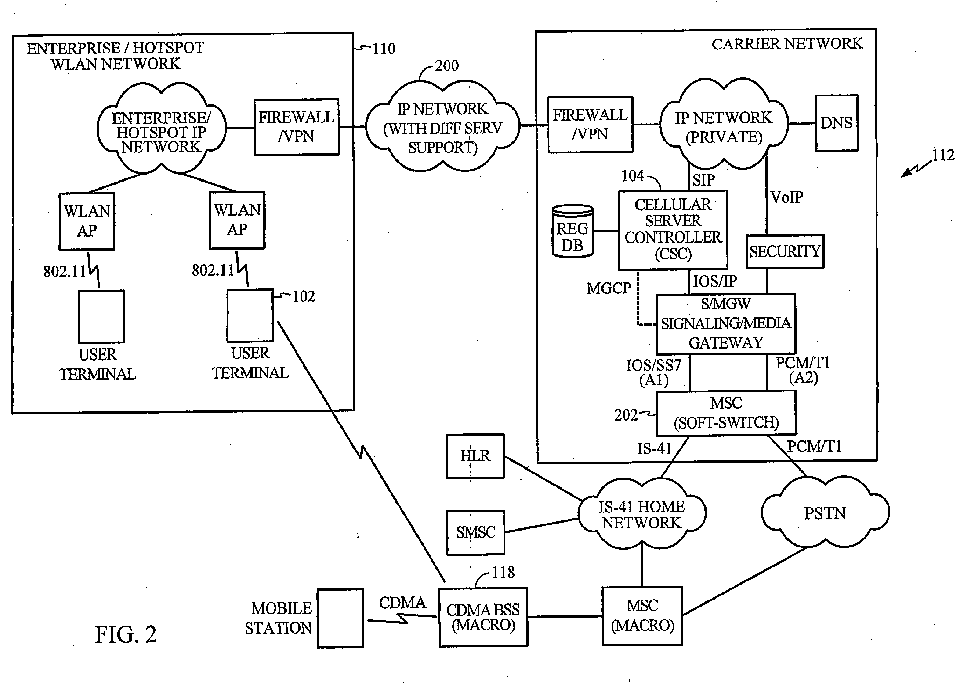

The CSC 104 has an interface on line 116 with the WLAN 110 to receive a hard handoff request for an identified UT 102. The UT's position in the cellular network is information that is conventionally tracked by an MSC/VLR (not shown) in accordance with standard network policies. Because the CSC has acquired the UT identity, and the UT's position in the cellular network is known, the CSC 104 is able to further the initiation of a hard handoff command to the UT cellular subsystem 114 in response to the hard handoff trigger. Additional details of the WLAN and cellular networks are provided in the explanation of Fig. 2 below.

As noted above, the UT 102 is a multi-mode portable device supporting a hard handoff procedure for a call from a WLAN to a cellular telephone network. The WLAN subsystem 106 establishes a link 108 between the UT and the serving WLAN 110, and establishes a call via the established WLAN link 108. The link 108 is also used to forward information identifying the UT within the cellular network 112, to the serving WLAN 110. For example, the WLAN can be an IEEE 808.11, Bluetooth, or IEEE 802.15 network, and the WLAN call can be in a format such as packet data, voice over Internet Protocol (VoIP), or video telephony (VT). However, the UT is not necessarily limited to any particular WLAN call format or network type.

The information that the WLAN subsystem 106 forwards to identify the UT within the cellular network is typically the UT's cellular network identity. Depending upon the cellular network type, the UT identity information may be the UT ESN, MEID, IMSI, or MIN associated with the UT. Electronic Serial Number (ESN) is a number used to identify a particular device or piece of hardware. Mobile Equipment ID (MEID) is likewise a device identifier. International Mobile Subscriber Identity (IMSI) is a number used to identifier a subscriber (phone number) in a cellular network. Mobile Identity Number (MIN) is the 10-digit number previously used in North American networks, which has since been replaced by IMSI. Other types of identifiers can potentially be used, as long as they are known by both the UT and the cellular network.

Generally, the UT 102 can be said to monitor the serving cellular network. When the UT first acquires the cellular network, it must perform a registration procedure. In this procedure the UT provides the network with its current location (cell ID). When the UT 102 moves within the cellular network, it may change the cell it listens to (monitors) based upon reception quality. The UT provides location information back to the cellular network based on network policies. This can be done on time basis or registration zone basis, for example, although other procedures are known. When the network needs to reach (page) the UT, it attempts the last known (reported) cell or registration zone. Alternately, a flooding page may be used. So, the network has its own capabilities to reach the UT. Typically, the footprint of the cellular network cell is larger than the WLAN hotspot. Hence, the UT is much more likely to change hotspots, or lose a WLAN link, than it is to change cellular network cells.

After initially registering with the cellular network 112 in a conventional manner, the UT cellular subsystem monitors a serving cell or Base Station Transceiver (BTS), or a group of cells (a registration zone) associated with a Base Station Controller (BSC) in the cellular network. This monitoring function is intended to describe the conventional pattern of control channel communications that occur between a UT and cellular network while the UT is registered, but not actively engaged in a cellular network call.

In addition to these conventional reporting procedures, the system may be enabled so that the UT sends periodic reports, concerning its reception of the surroundings cellular system, to the CSC via both the WLAN and the cellular system. For example, each report may include the measurements of the four strongest cellular cells being received by the UT. The CSC updates the record of the UT's position using these reports. In the event that a WLAN link is lost during a call, the CSC can promote the hard handoff based upon knowledge obtained from updates received via both the WLAN and cellular network. In yet another aspect, the CSC primarily depends up position reports received via the WLAN network to update the location of the UT in the cellular network.

The present invention system and UT are applicable to any kind of cellular network. For example, the cellular network may be a Code Division Multiple Access (CDMA), Global System for Mobile Communications (GSM), or Universal Mobile Telecommunications System (UMTS) networks. However, the invention is not limited to just these cellular networks.

The UT cellular subsystem 114 receives a hard handoff command from the cellular network 112, in response to the UT WLAN subsystem 106 losing the link 108 with the serving WLAN 110. After receiving the hard handoff command, the cellular subsystem 114 continues the call via the cellular network 112.

More specifically, the UT cellular subsystem 114 receives a hard handoff command, with cellular network resource allocations in a common control channel message, such as a paging message, SMS message, or a multicast SMS message. However, it is possible to communicate resource allocations in other types of control messages. In response to the control channel message, the cellular subsystem 114 tunes to an allocated traffic channel within the cellular network. After establishing a traffic channel connection with a serving BTS (not shown) associated with BS 118, the cellular subsystem 114 sends a Handoff Completion Message (HOCM) to that serving BTS.

Fig. 2 is a schematic block diagram depicting a UT operating in both a 802.11 hotspot and a cellular network. The cellular network 112 comprises a network entity, referred to herein as CSC 104, which tracks the UT 102, even as the UT is engaged in a call carried over a WLAN link. The UT 102 monitors the cellular network 112, and the cell (BTS) that is best able to communicate with the UT. The UT may be a dual mode device, with two radio frequency (RF) transceivers that are able to monitor and link to the WLAN and cellular networks simultaneously. Alternately, the UT may be a single mode device that monitors one network (i.e., the cellular network) while you are temporary disabling the link with the serving network (i.e. the WLAN). This procedure is already defined for a UT operating in an IS-95 or IS-2000 cellular network.

When a radio link loss is detected by the hotspot network, a request is sent to the cellular network, via Internet Protocol (IP) network 200, to the cellular network 112. Specifically, a request is sent that a traffic channel be built between the UT 102 and the currently monitored BTS associated with BS 118 that has been tracked by the mobile services switching center (MSC) 202. The CSC 104 directs that the resources allocated to the UT, and also directs that the allocations be communicated to the UT via a paging or other control channel.

As shown, the CSC 104 is an entity distinct from the MSC 202. In one aspect, the CSC 104 is configured to operate like a Short Message Service Center (SMSC). In this manner, the resource allocation information can be sent to the UT in the form of a SMS message. In this aspect the UT has an address to which the SMS message can be sent that is always registered, known to all terminals, and is never engaged in a call. The SMS message can be formatted like a paging message, carrying an array of one or more structures that include the UT ID, along with resource allocations. Once the UT receives this SMS handoff notification, it can begin conventional handoff procedures, as if the call was being transferred between BTS units in the cellular network.

In the event that the cellular network is limited to sending SMS messages to large registration areas. The system may be optimized to associate the UT with the best BTS by assigning a different UT address to every registration zone. A registration zone is understood to be a cellular network region that can be a BTS or group of BTS units associated with a particular BSC. The UT and the CSC know *a priori* the unique address associated with each registration zone. This can be accomplished by having the UT report its current registration zone in its monitoring reports to the CSC. In some aspects, the UT can send an update to the cellular network when it changes its service cell in the cellular network, while being served by a WLAN. In another aspect, the UT sends a location update message to the cellular network when a call is initiated in the WLAN. In the event that the UT loses its WLAN link during a call, these options permit the network track the UT location to a single known cell. Thus, enabling a rapid handoff in the event the WLAN link is lost.

For example, a hash algorithm can be used to generate a phony address for each registration zone. The Visiting Location Register (VLR) database would include information cross-referencing UT addresses with particular registration zones. Conventionally, a VLR maintains temporary user information, such as current location, to manage requests from subscribers who are out of the area covered by their home system.
The VLR collects and sends routing information to the MSC, which permits the MSC to connect to the UT.

Alternately, the CSC may send a handoff notification, which is also referred to herein as a Universal Handoff Direction Message (UHDM)-like message, to the UT in a broadcast/multicast SMS mechanism to relevant registration zones. This aspect may require enhancements to the IS-41 standard that are not currently supported. Although the example system of Fig. 2 specifically depicts an 802.11 WLAN and a CDMA wireless network, it should be understood that the invention can be practiced in a similar manner between other types of WLANs and other types of cellular networks.

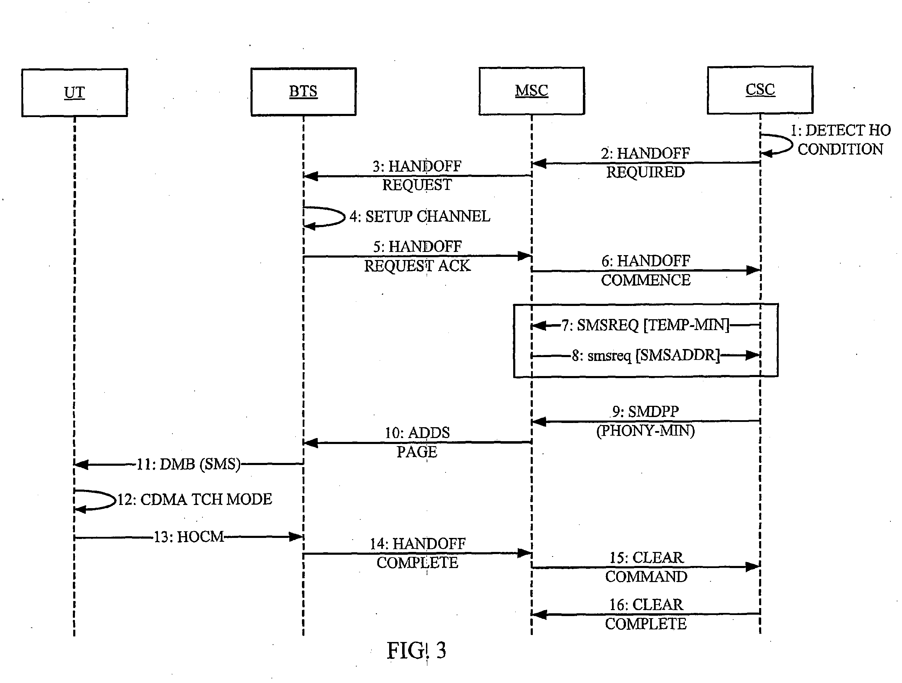

Fig. 3 depicts a WLAN to CDMA UHDM-like message flow diagram. In a conventional hard handoff procedure, the serving BS initiates a hard handoff to a target BS in response to a trigger. The serving BS waits until the resources are set up in the target cell, and then commands the UT by sending a UHDM to perform the handoff to the specified BS. With the above-described hotspot architecture, the serving WLAN network cannot send a UHDM message to the UT, since the handoff trigger only occurs after the link between the UT and WLAN has been lost. The diagram can be explained with the following sequence of steps.

Through communications with the WLAN, the CSC initially detects that the WLAN call link has been lost. This event triggers the CSC to start a handoff procedure from the WLAN network to the cellular network.

The CSC initiates an inter BSC hard handoff procedure by sending a Handoff Required IOS message to the MSC, giving the CELL_ID information forwarded to CSC from the UT, via the WLAN.

The MSC communicates with the target BS to initiate a handoff.

The target BS allocates and sets up traffic channels for use by the UT.

Once the traffic channels are set, the BS responds to the MSC with a Handoff Request Acknowledgement message.

The MSC forwards the handoff parameters to the CSC by sending an IOS Handoff Command message.

The CSC builds an UHDM-like message, packed inside a SMS message, and initiates a SMS transmission to a well-known phony MIN mobile (the UT) that is associated with the target BS. The CSC sends a SMSREQ message to the MSC.

The MSC responds with a smsreq message back to the CSC. Note, Steps 7 and 8 can be performed in parallel to the performance of Steps 1-6, to minimize latency.

The CSC sends the SMS with the UHDM-like message to the phony MIN number in an SMDPP message.

The MSC, upon receipt of the SMDPP message, builds an ADDS Page message and sends that to the target BS through which the phony MIN has been registered.

The BS sends a DBM message to the UT. The DBM includes the SMS with the UHDM-like message.

Once the UT receives the SMS message on the paging channel addressed to its well-known phony address, it jumps into the CDMA mode. The UT initializes its state to the cellular active state, and when it detects the F-FCH of the target BS, it sends the Handoff Completion Message (HOCM) to the BS.

The BS sends a Handoff Complete message to the MSC, indicating that the handoff has been successfully completed.

Once the MSC receives the Handoff Complete message, it sends a Clear Command to the CSC.

The CSC releases all resources associated with the call and responds to the MSC with a Clear Complete message.

Although the Fig. 3 specifically depicts an 802.11 WLAN and a CDMA wireless network message flow, it should be understood that the invention can be practiced in a similar manner between other types of WLANs and other types of cellular networks.

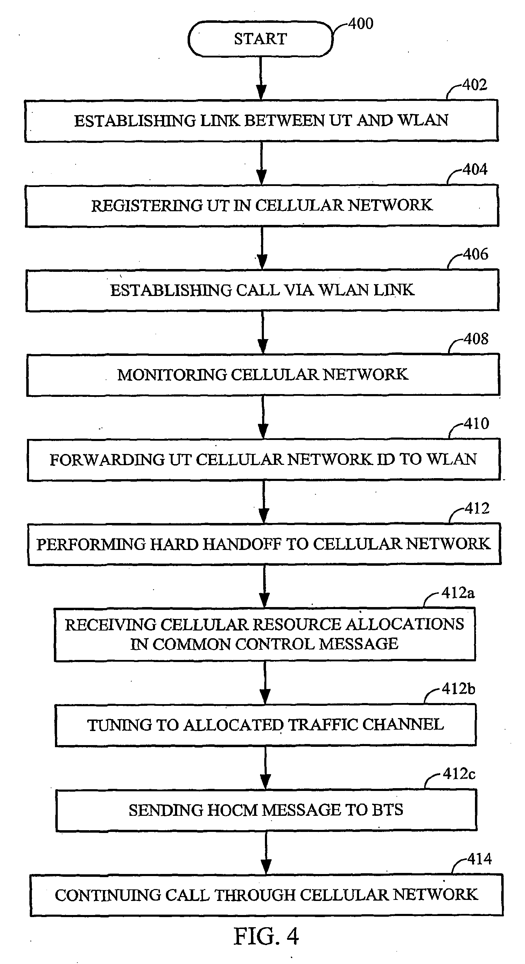

Fig. 4 is a flowchart illustrating a method for supporting a hard handoff procedure for a call from a WLAN to a cellular telephone network in a multi-mode portable UT. Although the method is depicted as a sequence of numbered steps for clarity, the numbering does not necessarily dictate the order of the steps. It should be understood that some of these steps may be skipped, performed in parallel, or performed without the requirement of maintaining a strict order of sequence. The method starts at Step 400.

Step 402 establishes a link between a UT and a serving WLAN. The WLAN can be an IEEE 802.11, IEEE 802.15, or Bluetooth network for example. Step 404 registers the UT in a cellular network, such as a CDMA, GSM, or UMTS network. Step 406 establishes a call via the established WLAN link. For example, the call can be in a packet data, voice over Internet Protocol (VoIP), or video telephony (VT) format. Simultaneously with Step 406, Step 408 monitors the serving cellular telephone network. For example, Step 408 may monitor a serving cellular network region such as a cell (BTS) or a group of cells (registration zone) associated with a BSC.

Step 410 forwards information identifying the UT within the cellular network, to the serving WLAN. For example, the information can be an ESN, MEID, IMSI, or MIN associated with the UT. Step 412 performs a hard handoff, from the WLAN network, to the cellular network in response to losing the link with the serving WLAN. Step 414 continues the call via the cellular network.

In one aspect, performing the hard handoff to the cellular network in Step 412 includes substeps. Step 412a receives cellular network resource allocations in a common control channel message, such as paging message, a SMS message, or a multicast SMS message. Step 412b tunes to an allocated traffic channel with the cellular network in response to the common control channel message. Step 412c sends a Handoff Completion Message (HOCM) to a serving BTS, in response to establishing a traffic channel connection with the serving BTS. Typically, Steps 402 through 414 must be completed within a time frame of about 50 to 150 milliseconds, or the call is lost.

A system and method have been provided for a hard handoff process that transfers a call from a WLAN to a cellular network. Examples have been provided to illustrate the invention, especially in the context of CDMA and 802.11 networks. However, the invention is not limited to merely these examples. Other variations and embodiments of the invention will occur to those skilled in the art.

## Claims

1. A method for supporting a hard handoff procedure for a call from a wireless local area network <WLAN> to a cellular telephone network, comprising:
establishing (402), by a multi-mode portable user terminal <UT>, a link between a UT and a serving WLAN;
establishing (406) a call via the established WLAN link;
simultaneously monitoring (408) a serving cellular network;
forwarding (410) information identifying the UT within the serving cellular network, to the serving WLAN;
receiving a hard handoff command initiated by a cellular server controller <CSC> in response to the CSC detecting the serving WLAN losing the link with the UT;
performing (412) a hard handoff to the serving cellular network based on receiving the hard handoff command; and
continuing (414) the call via the serving cellular network.

2. The method of claim 1 wherein establishing the call between the UT and the serving WLAN- includes establishing a call in a format selected from the group comprising packet data, voice over Internet Protocol <VoIP>, and video telephony <VT>.

3. The method of claim 1 wherein establishing the call between the UT and the serving WLAN includes establishing the call with a WLAN selected from the group comprising IEEE 808.11, Bluetooth, and IEEE 802.15 networks.

4. The method of claim 1 wherein performing the hard handoff to the cellular network includes handing the call to a cellular network selected from the group comprising Code Division Multiple Access <CDMA>, Global System for Mobile Communications <GSM>, and Universal Mobile Telecommunications System <UMTS>.

5. The method of claim 1 wherein simultaneously monitoring a serving cellular network includes monitoring a serving Base Station Transceiver <BTS> in the cellular network; and
wherein forwarding information identifying the UT within the cellular network includes forwarding information selected from the group comprising a UT Electronic Serial Number <ESN>, Mobile Equipment ID <MEID>, International Mobile Subscriber Identity <IMSI>, and Mobile Identity Number <MIN>.

6. The method of claim 5 wherein monitoring the serving BTS in the cellular network includes locating the UT within a cellular network region selected from the group comprising a cell <BTS> and a registration zone <a group of cells>.

7. The method of claim 1 wherein performing the hard handoff to the cellular network includes:
receiving cellular network resource allocations in a common control channel message; and
in response to the common control channel message, tuning to an allocated traffic channel with the cellular network.

8. The method of claim 7 wherein receiving cellular network resource allocations in the common control channel message includes receiving a common control channel message selected from the group comprising a paging message, a Short Message Service <SMS> message, and multicast SMS message.

9. The method of claim 7 wherein performing the hard handoff to the cellular network includes the UT sending a Handoff Completion Message <HOCM> to a serving BTS, in response to establishing a traffic channel connection with the serving BTS.

10. The method of claim 1 further comprising:
prior to monitoring the serving cellular network, registering the UT in the cellular network.

11. A system (100) that supports a hard handoff procedure for transferring a call from a wireless local area network <WLAN> (110) to a cellular network (112), the system comprising:
a user terminal <UT> (102) comprising:
a WLAN subsystem (106) to establish call through a link between the UT and a serving WLAN, and forward information identifying the UT within a serving cellular network, to the serving WLAN; and,
a cellular subsystem (114) registered in, and monitoring the serving cellular telephone network, and receiving a hard handoff command to continue the call via the cellular network; and,
a cellular server controller <CSC> (104) having an interface with the serving WLAN to accept a hard handoff trigger for the UT based on the serving WLAN losing the link with the WLAN subsystem and to further a hard handoff command to the cellular subsystem in response to the hard handoff trigger.

12. One or more processors configured to implement a method for supporting a hard handoff procedure for a call from a wireless local area network <WLAN> to a cellular telephone network, of any of claims 1 to 10

13. A computer program comprising code means adapted to perform a method for supporting a hard handoff procedure for a call from a wireless local area network <WEAN> to a cellular telephone network, of any of claims 1 to 10, when executed on a computer.

14. A multi-mode portable user terminal <UT> (102) for supporting a hard handoff procedure for a call from a wireless local area network <WLAN> (110) to a cellular network, the UT comprising:
means for establishing a link between the UT and a serving WLAN, establishing a call via the established WLAN link, and forwarding information identifying the UT within a serving cellular network, to the serving WLAN; and
means for monitoring the serving cellular telephone network (112), receiving a hard handoff command initiated by a cellular server controller <CSC> (104) in response to the CSC detecting the serving WLAN losing the link with the UT, and continuing the call via the serving cellular network.

15. The UT of claim 14, further comprising:
wherein the means for establishing a link between the UT and a serving WLAN, establishing a call via the established WLAN link, and forwarding information identifying the UT within [[the]] a serving cellular network, to the serving WLAN further comprises a WLAN subsystem; and
wherein the means for monitoring [[a]] the serving cellular telephone network, receiving a hard handoff command[[,]] initiated by a cellular server controller <CSC> in response to the CSC detecting the serving WLAN losing the link with the UT, and continuing the call via the serving cellular network further comprises a cellular subsystem.

16. The UT of claim 15 wherein the WLAN subsystem establishes a call with the serving WLAN in a format selected from the group comprising packet data, voice over Internet Protocol <VoIP>, and video telephony <VT>.

17. The UT of claim 15 wherein the WLAN subsystem establishes the call with a WLAN selected from the group comprising IEEE 808.11, Bluetooth, and IEEE 802.15 networks.

18. The UT of claim 15 wherein the cellular subsystem monitors a cellular network selected from the group comprising Code Division Multiple Access <CDMA>, Global System for Mobile Communications <GSM>, and Universal Mobile Telecommunications System <UMTS>.

19. The UT of claim 15 wherein the cellular subsystem monitors a serving Base Station Transceiver <BTS> in the cellular network; and
wherein the WLAN subsystem forwards information identifying the UT within the cellular network by forwarding information selected from the group comprising a UT Electronic Serial Number <ESN>, Mobile Equipment ID <MEID>, International Mobile Subscriber identity <IMSI>, and Mobile Identity Number <MIN>.

20. The UT of claim 19 wherein the cellular subsystem provides UT location information within a cellular network region selected from the group comprising a cell and a registration zone <a group of cell>.

21. The UT of claim 15 wherein the cellular subsystem receives a hard handoff command, with cellular network resource allocations in a common control channel message, and tunes to an allocated traffic channel with the cellular network.

22. The UT of claim 21 wherein the cellular subsystem receives cellular network resource allocations in the common control channel message selected from the group comprising a paging message, a Short Message Service <SMS> message, and multicast SMS message.

23. The UT of claim 21 wherein the cellular subsystem sends a Handoff Completion Message <HOCM> to a BTS, in response to establishing a traffic channel connection with the serving BTS.

24. The UT of claim 15 wherein the cellular subsystem registers with the cellular network, prior to monitoring the serving cellular network.

25. A method for a cellular server controller <CSC> (104) to handoff a call, comprising:
receiving, from a serving WLAN (110) having a link supporting an established call with a UT, a hard handoff trigger for the UT based on the serving WLAN losing the link with the UT, wherein the hard handoff trigger comprises a serving cellular network (112) monitored by the UT; and
sending a hard handoff command to the UT in response to the hard handoff trigger, wherein the hard handoff command is operable to handoff of the call from the serving WLAN to the serving cellular network.

26. The method of claim 25, wherein sending the hard handoff command further comprises:
sending cellular network resource allocations in a common control channel message, wherein the cellular network resource allocations comprises an allocated traffic channel within the serving cellular network.

27. The method of claim 26, wherein the common control channel message is selected from a group comprising a paging message, a Short Message Service <SMS> message, and a multicast SMS message.

28. A cellular server controller <CSC> (104), comprising:
means for receiving, from a serving WLAN (110) having a link supporting an established call with a UT, a hard handoff trigger for the UT based on the serving WLAN losing the link with the UT, wherein the hard handoff trigger comprises a serving cellular network (112) monitored by the UT; and
means for sending a hard handoff command to the UT in response to the hard handoff trigger, wherein the hard handoff command is operable to handoff of the call from the serving WLAN to the serving cellular network (112).

29. The CSC of claim 28, wherein the means for sending the hard handoff command further comprises:
means for sending cellular network resource allocations in a common control channel message, wherein the cellular network resource allocations comprises an allocated traffic channel within the serving cellular network.

30. The CSC of claim 29, wherein the common control channel message is selected from a group comprising a paging message, a Short Message Service <SMS> message, and a multicast SMS message.

## Patentansprüche

1. Verfahren zum Unterstützen einer Hard-Handoff-Prozedur für einen Anruf von einem WLAN bzw. lokalen Drahtlosnetzwerk <WLAN> zu einem Mobil- bzw. Zellentelefonnetzwerk, das Folgendes aufweist:
Aufbauen (402), durch ein tragbares Multi-Modus-Nutzerendgerät bzw. -UT (UT = user terminal) <UT> einer Verbindung zwischen einem UT und einem Dienst vorsehenden WLAN;
Aufbauen (406) eines Anrufs über die aufgebaute WLAN-Verbindung;
gleichzeitiges Überwachen (408) eines Dienst vorsehenden zellularen Netzwerks bzw. Zellennetzwerks;
Weiterleiten (410) von Information, die das UT innerhalb des Dienst vorsehenden Zellennetzwerks identifiziert, an das Dienst vorsehende WLAN;
Empfangen eines Hard-Handoff-Befehls, der von einem Zellen-Server-Controller <CSC> (CSC = cellular server controller) ansprechend darauf initialisiert wird, dass der CSC detektiert hat, dass das Dienst vorsehende WLAN die Verbindung mit dem UT verliert;
Durchführen (412) eines Hard-Handoffs an das Dienst vorsehende Zellennetzwerk basierend auf dem Empfang des Hard-Handoff-Befehls; und
Fortsetzen (414) des Anrufs über das Dienst vorsehende Zellennetzwerk.

2. Verfahren nach Anspruch 1, wobei das Aufbauen des Anrufs zwischen dem UT und dem Dienst vorsehenden WLAN das Aufbauen eines Anrufs in einem Format aufweist, das aus der Gruppe ausgewählt ist, die Folgendes aufweist: Paketdaten, Voice-over-IP-Protokoll <VoIP> und Videotelefonie <VT>.

3. Verfahren nach Anspruch 1, wobei das Aufbauen des Anrufs zwischen dem UT und dem Dienst vorsehenden WLAN das Aufbauen des Anrufs mit einem WLAN aufweist, das aus der Gruppe ausgewählt ist, die Folgendes aufweist: IEEE-808.11-, Bluetooth- und IEEE-802.15-Netzwerke.

4. Verfahren nach Anspruch 4, wobei das Durchführen eines Hard-Handoffs an das Zellen netzwerk das Übergeben bzw. Handoff des Anrufs an ein Zellen netzwerk aufweist, das aus der Gruppe ausgewählt ist, die Folgendes aufweist: Codemultiplex-Vielfachzugriff bzw. Code Division Multiple Access <CDMA>, Global System for Mobile Communications <GSM> und Universal Mobile Telecommunications System <UMTS>.

5. Verfahren nach Anspruch 1, wobei das gleichzeitige Überwachen eines Dienst vorsehenden Zellennetzwerks das Überwachen eines Dienst vorsehenden Basisstationstransceivers <BTS> im Zellennetzwerk aufweist; und
wobei das Weiterleiten von Information, die das UT bzw. Nutzerendgerät innerhalb des Zellennetzwerks identifiziert, das Weiterleiten von Information aufweist, die aus der Gruppe ausgewählt ist, die Folgendes aufweist: eine elektronische Seriennummer eines Nutzerterminals bzw. Electronic Serial Number <ESN>, eine Mobileinrichtungs-ID bzw. Mobile Equipment ID <MEID>, eine International Mobile Subscriber Identity <IMSI> und eine Mobileinheitenidentitätsnummer bzw. Mobile Identity Number <MIN>.

6. Verfahren nach Anspruch 5, wobei das Überwachen des Dienst vorsehenden BTS in dem zellularen Netzwerk bzw. Zellen netzwerk das Lokalisieren des Nutzerendgeräts bzw. UT innerhalb eines Zellennetzwerkbereiches aufweist, der aus der Gruppe ausgewählt ist, die Folgendes aufweist: eine Zelle <BTS> und eine Registrierungszone <eine Gruppe von Zellen>.

7. Verfahren nach Anspruch 1, wobei das Durchführen des Hard-Handoff an das Zellennetzwerk Folgendes aufweist:
Empfangen von Zellennetzwerkressourcenzuweisungen in einer Nachricht auf einem gemeinsam genutzten Steuerkanal; und
ansprechend auf die Nachricht auf einem gemeinsam genutzten Steuerkanal, Einstellen auf einen zugewiesenen Verkehrskanal innerhalb des Zellennetzwerks.

8. Verfahren nach Anspruch 7, wobei das Empfangen der Zellennetzwerkressourcenzuweisungen in der Nachricht auf einem gemeinsam genutzten Steuerkanal das Empfangen einer Nachricht auf einem gemeinsam genutzten Steuerkanal aufweist, die aus der Gruppe ausgewählt ist, die Folgendes aufweist: eine Paging-Nachricht, eine SMS-Nachricht (SMS = Short Message Service) <SMS> und einer Multicast-SMS-Nachricht.

9. Verfahren nach Anspruch 7, wobei das Durchführen des Hard-Handoffs an das Zellennetzwerk aufweist, dass das UT eine Handoff-Abschluss-Nachricht bzw. Handoff Completion Message <HOCM> an einen Dienst vorsehenden BTS sendet, und zwar ansprechend auf den Aufbau einer Verkehrskanalverbindung mit dem Dienst vorsehenden BTS.

10. Verfahren nach Anspruch 1, das weiter Folgendes aufweist:
vor dem Überwachen des Dienst vorsehenden Zellennetzwerks, Registrieren des UT in dem Zellennetzwerk.

11. Ein System (100), das ein Hard-Handoff-Verfahren zum Transferieren bzw. Übertragen eines Anrufs von einem lokalen Drahtlosnetzwerk <WLAN> (110) an ein Zellennetzwerk (112) aufweist, wobei das System Folgendes aufweist:
ein Nutzerterminal <UT> (102), das Folgendes aufweist:
ein WLAN-Subsystem (106), um einen Anruf durch eine Verbindung zwischen dem UT und einem Dienst vorsehenden WLAN aufzubauen, und um Information, die das UT in einem Dienst vorsehenden Zellennetzwerk identifiziert, an das Dienst vorsehende WLAN weiterzuleiten; und
ein Zellen-Subsystem (114), das im Dienst vorsehenden Mobiltelefonnetzwerk bzw. Zellen-Telefonnetzwerk registriert ist und dieses überwacht, und das einen Hard-Handoff-Befehl empfängt, den Anruf über das Zellennetzwerk fortzusetzen; und
einen Zellen-Server-Controller <CSC>, der eine Schnittstelle zu dem Dienst vorsehenden WLAN hat, um einen Hard-Handoff-Auslöser bzw. -Trigger für das UT basierend darauf anzunehmen, dass das Dienst vorsehende WLAN die Verbindung mit dem WLAN-Subsystem verliert und um einen Hard-Handoff-Befehl an das Zellen-Subsystem ansprechend auf den Hard-Handoff-Trigger weiterzuleiten.

12. Einer oder mehrere Prozessoren, die konfiguriert sind, um ein Verfahren zum Unterstützen einer Hard-Handoff-Prozedur für einen Anruf von einem WLAN an ein Mobiltelefonnetzwerk bzw. Zellen-Telefonnetzwerk nach einem der Ansprüche 1 bis 10 zu implementieren.

13. Ein Computerprogramm weist Codemittel auf, die ausgelegt sind, um ein Verfahren zum Unterstützen einer Hard-Handoff-Prozedur für einen Anruf von einem WLAN an ein Mobiltelefonnetzwerk bzw. Zellen-Telefonnetzwerk nach einem der Ansprüche 1 bis 10 durchzuführen, wenn sie auf einem Computer ausgeführt werden.

14. Ein tragbares Multi-Modus-Nutzerendgerät <UT> (102) zum Unterstützen einer Hard-Handoff-Prozedur für einen Anruf von einem WLAN (110) an ein Zellennetzwerk, wobei das UT Folgendes aufweist:
Mittel zum Aufbauen einer Verbindung zwischen dem UT und einem Dienst vorsehenden WLAN, zum Aufbauen eines Anrufs über die aufgebaute WLAN-Verbindung und zum Weiterleiten von Information, die das UT innerhalb eines Dienst vorsehenden Zellennetzwerks identifiziert, an das Dienst vorsehende WLAN; und
Mittel zum Überwachen des Dienst vorsehenden Zellentelefonnetzwerks (112), zum Empfangen eines Hard-Handoff-Befehls, der von einem Zellen-Server-Controller <CSC> (104) ansprechend darauf eingeleitet wurde, dass der CSC detektiert hat, dass das Dienst vorsehende WLAN die Verbindung mit dem UT verliert, und zum Fortsetzen des Anrufs über das Dienst vorsehende Zellennetzwerk.

15. Nutzerendgerät bzw. UT nach Anspruch 14, das weiter Folgendes aufweist:
wobei die Mittel zum Aufbauen einer Verbindung zwischen dem UT und einem Dienst vorsehenden WLAN, zum Aufbauen eines Anrufs über die aufgebaute WLAN-Verbindung und zum Weiterleiten von Information, die das UT innerhalb eines Dienst vorsehenden Zellennetzwerks identifiziert, an das Dienst vorsehende WLAN weiter ein WLAN-Subsystem aufweisen; und
wobei die Mittel zum Überwachen des Dienst vorsehenden Zellentelefonnetzwerks, zum Empfangen eines Hard-Handoff-Befehls, der von einem Zellen-Server-Controller <CSC> ansprechend darauf eingeleitet wurde, dass der CSC detektiert hat, dass das Dienst vorsehende WLAN die Verbindung mit dem UT verliert, und zum Fortsetzen des Anrufs über das Dienst vorsehende Zellennetzwerk weiter ein Zellen-Subsystem aufweisen.

16. Nutzerendgerät bzw. UT nach Anspruch 15, wobei das WLAN-Subsystem einen Anruf mit dem Dienst vorsehenden WLAN in einem Format aufbaut, das aus der Gruppe ausgewählt ist, die aus Folgendem besteht: Paketdaten, Voice-over-Internet-Protocol <VoIP> und Videotelefonie <VT>.

17. Nutzerendgerät bzw. UT nach Anspruch 15, wobei das WLAN-Subsystem den Anruf mit einem WLAN aufbaut, das aus der Gruppe ausgewählt ist, die Folgendes aufweist: IEEE-808.11-, Bluetooth- und IEEE-802.15-Netzwerke.

18. Nutzerendgerät bzw. UT nach Anspruch 15, wobei das Zellensubsystem ein Zellennetzwerk überwacht, das aus der Gruppe ausgewählt ist, die Folgendes aufweist: Codemultiplex-Vielfachzugriff bzw. Code Division Multiple Access <CDMA>, Global System for Mobile Communications <GSM> und Universal Mobile Telecommunications System <UMTS>.

19. Nutzerendgerät bzw. UT nach Anspruch 15, wobei das Zellen-Subsystem einen Dienst vorsehenden Basisstationstransceiver <BTS> in dem Zellennetzwerk überwacht; und
und wobei das WLAN-Subsystem Information weiterleitet, die das UT in dem Zellennetzwerk identifiziert, durch Weiterleiten von Information, die aus der Gruppe ausgewählt, die Folgendes aufweist: eine elektronische Seriennummer eines Nutzerterminals <ESN>, eine Mobileinrichtungs-ID bzw. Mobile Equipment ID <MEID>, eine International Mobile Subscriber Identity <IMSI> und eine Mobileinheitenidentitätsnummer bzw. Mobile Identity Number <MIN>.

20. Nutzerendgerät bzw. UT nach Anspruch 19, wobei das Zellen-Subsystem UT-Standortinformation bezüglich eines Zellennetzwerkbereichs vorsieht, der ausgewählt wird aus der Gruppe, die eine Zelle und eine Registrierungszone <eine Gruppe von Zellen> aufweist.

21. Nutzerendgerät bzw. UT nach Anspruch 15, wobei das Zellensubsystem einen Hard-Handoff-Befehl mit Zellennetzwerk-Ressourcenzuweisungen in einer Nachricht auf einem gemeinsam genutzten Steuerkanal empfängt und auf den zugewiesenen Verkehrskanal mit dem Zellennetzwerk einstellt.

22. Nutzerendgerät bzw. UT nach Anspruch 21, wobei das Zellen-Subsystem Zellennetzwerk-Ressourcenzuweisungen in der Nachricht auf einem gemeinsam genutzten Steuerkanal empfängt, die aus der Gruppe ausgewählt sind, die Folgendes aufweist: eine Paging-Nachricht, eine SMS-Nachricht und eine Multicast-SMS-Nachricht.

23. Nutzerendgerät bzw. UT nach Anspruch 21, wobei das Zellen-Subsystem eine Handoff-Abschluss-Nachricht <HOCM> an einen BTS sendet, und zwar ansprechend auf das Aufbauen einer Verkehrskanalverbindung mit dem Dienst vorsehenden BTS.

24. Nutzerendgerät bzw. UT nach Anspruch 15, wobei sich das Zellensubsystem im Zellennetzwerk registriert, bevor es das Dienst vorsehende Zellennetzwerk überwacht.

25. Ein Verfahren für einen Zellen-Server-Controller <CSC> (104), um einen Anruf zu übergeben bzw. einen Handoff bezüglich eines Anrufs durchzuführen, das Folgendes aufweist:
Empfangen, von einem Dienst vorsehenden WLAN (110), das eine Verbindung hat, die einen aufgebauten Anruf mit einem UT unterstützt, eines Hard-Handoff-Triggers für das UT basierend darauf, dass das Dienst vorsehende WLAN die Verbindung mit dem UT verliert, wobei der Hard-Handoff-Trigger ein Dienst vorsehendes Zellennetzwerk (112) aufweist, das vom UT überwacht wird; und
Senden eines Hard-Handoff-Befehls an das UT ansprechend auf den Hard-Handoff-Trigger, wobei der Hard-Handoff-Befehl betrieben werden kann, um einen Anruf von dem Dienst vorsehenden WLAN an das Dienst vorsehende Zellennetzwerk zu übergeben.

26. Verfahren nach Anspruch 25, wobei das Senden des Hard-Handoff-Befehls weiter Folgendes aufweist:
Senden von Zellennetzwerk-Ressourcenzuweisungen in einer Nachricht auf einem gemeinsam genutzten Steuerkanal, wobei die Zellennetzwerk-Ressourcenzuweisungen einen zugewiesenen Verkehrskanal innerhalb des Dienst vorsehenden Zellennetzwerks aufweisen.

27. Verfahren nach Anspruch 26, wobei die Nachricht auf einem gemeinsam genutzten Steuerkanal aus einer Gruppe ausgewählt ist, die Folgendes aufweist: eine SMS-Nachricht und eine Multicast-SMS-Nachricht.

28. Ein Zellen-Server-Controller <CSC> (104), der Folgendes aufweist:
Mittel zum Empfangen, von einem Dienst vorsehenden WLAN (110), das eine Verbindung hat, die einen aufgebauten Anruf mit einem UT unterstützt, eines Hard-Handoff-Triggers für das UT basierend darauf, dass das Dienst vorsehende WLAN die Verbindung mit dem UT verliert, wobei der Hard-Handoff-Trigger ein Dienst vorsehendes Zellennetzwerk (112) aufweist, das vom UT überwacht wird; und
Mittel zum Senden eines Hard-Handoff-Befehls an das UT ansprechend auf den Hard-Handoff-Trigger, wobei der Hard-Handoff-Befehl betrieben werden kann, um einen Anruf von dem Dienst vorsehenden WLAN an das Dienst vorsehende Zellennetzwerk zu übergeben.

29. Zellen-Server-Controller bzw. CSC nach Anspruch 28, wobei die Mittel zum Senden des Hard-Handoff-Befehls weiter Folgendes aufweist:
Mittel zum Senden von Zellennetzwerk-Ressourcenzuweisungen in einer Nachricht auf einem gemeinsam genutzten Steuerkanal, wobei die Zellennetzwerk-Ressourcenzuweisungen einen zugewiesenen Verkehrskanal innerhalb des Dienst vorsehenden Netzwerks aufweisen.

30. Zellen-Server-Controller bzw. CSC nach Anspruch 29, wobei die Nachricht auf einem gemeinsam genutzten Steuerkanal ausgewählt ist aus einer Gruppe, die Folgendes aufweist: eine Paging-Nachricht, eine SMS-Nachricht und eine Multicast-SMS-Nachricht.

## Revendications

1. Procédé pour assurer une procédure de transfert sec pour un appel à partir d'un réseau local sans fil <WLAN> vers un réseau téléphonique cellulaire, comprenant les étapes suivantes :
établir (402), par un terminal d'utilisateur portable multimode <UT>, une liaison entre un UT et un WLAN de desserte ;
établir (406) un appel par l'intermédiaire de la liaison WLAN établie ;
surveiller simultanément (408) un réseau cellulaire de desserte ;
transférer (410) des informations identifiant l'UT dans le réseau cellulaire de desserte, vers le WLAN de desserte ;
recevoir une commande de transfert sec initiée par un contrôleur de serveur cellulaire <CSC> en réponse au fait que le CSC détecte que le WLAN de desserte perd la liaison avec l'UT ;
réaliser (412) un transfert sec vers le réseau cellulaire de desserte sur la base de la réception de la commande de transfert sec ; et
continuer (414) l'appel par l'intermédiaire du réseau cellulaire de desserte.

2. Procédé selon la revendication 1, dans lequel l'établissement de l'appel entre l'UT et le WLAN de desserte inclut l'établissement d'un appel dans un format choisi dans le groupe comprenant des paquets de données, de la voix sur le Protocole Internet <VoIP>, et de la téléphonie vidéo <VT>.

3. Procédé selon la revendication 1, dans lequel l'établissement de l'appel entre l'UT et le WLAN de desserte inclut l'établissement de l'appel dans un WLAN choisi dans le groupe comprenant des réseaux IEEE 808.11, Bluetooth et IEEE 802.15.

4. Procédé selon la revendication 1, dans lequel la réalisation du transfert sec vers le réseau cellulaire inclut la remise de l'appel à un réseau cellulaire choisi dans le groupe comprenant un système à Accès Multiple par Différence de Code <CDMA>, le Système Global de Communications Mobiles <GSM> et le Système de Télécommunications Mobiles Universel <UMTS>.

5. Procédé selon la revendication 1, dans lequel la surveillance simultanée d'un réseau cellulaire de desserte comprend la surveillance d'un Émetteur-récepteur de Station De Base <BTS> de desserte dans le réseau cellulaire ; et
dans lequel le transfert d'informations identifiant l'UT dans le réseau cellulaire comprend le transfert d'informations choisies dans le groupe comprenant un Numéro de Série Électronique <ESN> d'UT, un ID d'Equipement Mobile <MEID>, une Identité d'Abonné Mobile International <IMSI>, et un Numéro d'Identité de Mobile <MIN>.

6. Procédé selon la revendication 5, dans lequel la surveillance du BTS de desserte dans le réseau cellulaire inclut la localisation de l'UT dans une région de réseau cellulaire choisie dans le groupe comprenant une cellule <BTS> et une zone d'enregistrement <un groupe de cellules>.

7. Procédé selon la revendication 1, dans lequel la réalisation du transfert sec vers le réseau cellulaire comprend les étapes suivantes :
réception d'allocations de ressources de réseau cellulaire dans un message de canal de commande commun ; et
en réponse au message de canal de commande commun, le passage sur un canal alloué de communication avec le réseau cellulaire.

8. Procédé selon la revendication 7, dans lequel la réception d'allocations de ressources de réseau cellulaire dans le message de canal de commande commun inclut la réception d'un message de canal de commande commun choisi dans le groupe comprenant un message de télé-avertissement, un message du Service de Messages Courts <SMS> et un message SMS multi-diffusé.

9. Procédé selon la revendication 7, dans lequel la réalisation du transfert sec vers le réseau cellulaire comprend l'envoi par l'UT d'un Message d'Achèvement de Transfert <HOCM> vers un BTS de desserte, en réponse à l'établissement d'une connexion de canal de communication avec le BTS de desserte.

10. Procédé selon la revendication 1, comprenant en outre l'étape suivante :
avant de surveiller le réseau cellulaire de desserte, enregistrer l'UT dans le réseau cellulaire.

11. Système (100) qui assure une procédure de transfert sec pour transférer un appel à partir d'un réseau local sans fil <WLAN> (110) vers un réseau cellulaire (112), le système comprenant :
un terminal d'utilisateur <UT> (102) comprenant :
un sous-système WLAN (106) pour établir un appel par l'intermédiaire d'une liaison entre l'UT et un WLAN de desserte, et transférer des informations identifiant l'UT dans un réseau cellulaire de desserte, vers le WLAN de desserte ; et
un sous-système cellulaire (114) enregistré dans le réseau téléphonique cellulaire de desserte et surveillant celui-ci, et recevant une commande de transfert sec pour continuer l'appel par l'intermédiaire du réseau cellulaire ; et
un contrôleur de serveur cellulaire <CSC> (104) ayant une interface avec le WLAN de desserte pour accepter un déclencheur de transfert sec pour l'UT sur la base du fait que le WLAN de desserte perd la liaison avec le sous-système WLAN et pour émettre en outre une commande de transfert sec vers le sous-système cellulaire en réponse au déclencheur de transfert sec.

12. Un ou plusieurs processeurs agencés pour mettre en oeuvre un procédé pour assurer une procédure de transfert sec pour un appel à partir d'un réseau local sans fil <WLAN> vers un réseau téléphonique cellulaire, selon l'une quelconque des revendications 1 à 10.

13. Programme d'ordinateur comprenant des moyens de codes adaptés à réaliser un procédé pour assurer une procédure de transfert sec pour un appel à partir d'un réseau local sans fil <WLAN> vers un réseau téléphonique cellulaire, selon l'une quelconque des revendications 1 à 10, lorsqu'il est exécuté sur un ordinateur.

14. Terminal d'utilisateur portable multi-mode <UT> (102) pour assurer une procédure de transfert sec pour un appel à partir d'un réseau local sans fil <WLAN> (110) vers un réseau cellulaire, l'UT comprenant :
des moyens pour établir une liaison entre l'UT et un WLAN de desserte, établir un appel par l'intermédiaire de la liaison WLAN établie, et transférer des informations identifiant l'UT dans un réseau cellulaire de desserte, vers le WLAN de desserte ; et
des moyens pour surveiller le réseau téléphonique cellulaire de desserte (112), recevoir une commande de transfert sec initiée par un contrôleur de serveur cellulaire <CSC> (104) en réponse au fait que le CSC détecte que le WLAN de desserte perd la liaison avec l'UT, et continuer l'appel par l'intermédiaire du réseau cellulaire de desserte.

15. UT selon la revendication 14, dans lequel en outre :
les moyens pour établir une liaison entre l'UT et un WLAN de desserte, établir un appel par l'intermédiaire de la liaison WLAN établie, et transférer des informations identifiant l'UT dans un réseau cellulaire de desserte, vers le WLAN de desserte, comprennent en outre un sous-système WLAN ; et
les moyens pour surveiller le réseau téléphonique cellulaire de desserte, recevoir une commande de transfert sec initiée par un contrôleur de serveur cellulaire <CSC> en réponse au fait que le CSC détecte que le WLAN de desserte perd la liaison avec l'UT, et continuer l'appel par l'intermédiaire du réseau cellulaire de desserte, comprennent en outre un sous-système cellulaire.

16. UT selon la revendication 15, dans lequel le sous-système WLAN établit un appel avec le WLAN de desserte dans un format choisi dans le groupe comprenant des paquets de données, de la voix sur le Protocole Internet <VoIP>, et de la téléphonie vidéo <VT>.

17. UT selon la revendication 15, dans lequel le sous-système WLAN établit l'appel avec un WLAN choisi dans le groupe comprenant des réseaux IEEE 808.11, Bluetooth et IEEE 802.15.

18. UT selon la revendication 15, dans lequel le sous-système cellulaire surveille un réseau cellulaire choisi dans le groupe comprenant un système à Accès Multiple par Différence de Code <CDMA>, le Système Global pour des Communications Mobiles <GSM>, et le Système de Télécommunications Mobiles Universel <UMTS>.

19. UT selon la revendication 15, dans lequel le sous-système cellulaire surveille un Émetteur-récepteur de Station de Base <BTS> de desserte dans le réseau cellulaire ; et
dans lequel le sous-système WLAN transfère des informations identifiant l'UT dans le réseau cellulaire en transférant des informations choisies dans le groupe comprenant un Numéro de Série Électronique <ESN> d'UT, un ID d'Équipement Mobile <MEID>, une Identité d'Abonné Mobile International <IMSI> et un Numéro d'Identité de Mobile <MIN>.

20. UT selon la revendication 19, dans lequel le sous-système cellulaire fournit des informations de position d'UT dans une région de réseau cellulaire choisie dans le groupe comprenant une cellule et une zone d'enregistrement <un groupe de cellules>.

21. UT selon la revendication 15, dans lequel le sous-système cellulaire reçoit une commande de transfert sec, avec des allocations de ressources de réseau cellulaire dans un message de canal de commande commun, et passe sur un canal de communication alloué dans le réseau cellulaire.

22. UT selon la revendication 21, dans lequel le sous-système cellulaire reçoit des allocations de ressources de réseau cellulaire dans le message de canal de commande commun choisi dans le groupe comprenant un message de télé-avertissement, un message du Service de Messages Courts <SMS> et un message SMS multi-diffusé.

23. UT selon la revendication 21, dans lequel le sous-système cellulaire envoi un Message d'Achèvement de Transfert <HOCM> vers un BTS, en réponse à l'établissement d'une connexion de canal de communication avec le BTS de desserte.

24. UT selon la revendication 15, dans lequel le sous-système cellulaire s'enregistre auprès du réseau cellulaire, avant de surveiller le réseau cellulaire de desserte.

25. Procédé pour un contrôleur de serveur cellulaire <CSC> (104) pour transférer un appel, comprenant les étapes suivantes :
recevoir, à partir d'un WLAN de desserte (110) ayant une liaison assurant un appel établi avec un UT, un déclencheur de transfert sec pour l'UT sur la base du fait que le WLAN de desserte perd la liaison avec l'UT, le déclencheur de transfert sec comprenant un réseau cellulaire de desserte (112) surveillé par l'UT ; et
envoyer une commande de transfert sec vers l'UT en réponse au déclencheur de transfert sec, la commande de transfert sec étant actionnable pour transférer l'appel du WLAN de desserte vers le réseau cellulaire de desserte.

26. Procédé selon la revendication 25, dans lequel l'envoi de la commande de transfert sec comprend en outre l'étape suivante :
envoyer des allocations de ressources de réseau cellulaire dans un message de canal de commande commun, les allocations de ressources de réseau cellulaire comprenant un canal de communication alloué dans le réseau cellulaire de desserte.

27. Procédé selon la revendication 26, dans lequel le message de canal de commande commun est choisi dans un groupe comprenant un message de télé-avertissement, un message du Service de Messages Courts <SMS>, et un message SMS multi-diffusé.

28. Contrôleur de serveur cellulaire <CSC> (104), comprenant :
des moyens pour recevoir, à partir d'un WLAN de desserte (110) ayant une liaison assurant un appel établi avec un UT, un déclencheur de transfert sec pour l'UT sur la base du fait que le WLAN de desserte perd la liaison avec l'UT, le déclencheur de transfert sec comprenant un réseau cellulaire de desserte (112) surveillé par l'UT ; et
des moyens pour envoyer une commande de transfert sec vers l'UT en réponse au déclencheur de transfert sec, la commande de transfert sec étant actionnable pour transférer l'appel du WLAN de desserte vers le réseau cellulaire de desserte (112).

29. CSC selon la revendication 28, dans lequel les moyens pour envoyer la commande de transfert sec comprennent en outre :
des moyens pour envoyer des allocations de ressources de réseau cellulaire dans un message de canal de commande commun, les allocations de ressources de réseau cellulaire comprenant un canal de communication alloué dans le réseau cellulaire de desserte.

30. CSC selon la revendication 29, dans lequel le message de canal de commande commun est choisi dans un groupe comprenant un message de télé-avertissement, un message du Service de Messages Courts <SMS> et un message SMS multi-diffusé.
